# EUROPÄISCHE PATENTSCHRIFT

(11) **EP 1 498 830 B1**
(45) Veröffentlichungstag und Bekanntmachung des Hinweises auf die Patenterteilung: **14.09.2011**
(21) Anmeldenummer: 04012298.8
(22) Anmeldetag: 25.05.2004
(51) Int. Cl.: G06F 17/30

(54) **Verfahren zum Herunterladen von Informationen**
Method for downloading information
Procédé pour le téléchargement des informations

(30) Priorität: 18.07.2003 DE 10332667
(43) Veröffentlichungstag der Anmeldung: 19.01.2005
(73) Patentinhaber: JDM Innovation GmbH, 71711 Murr (DE)
(72) Erfinder: Jung, Roland, Dipl.-Ing., 71711 Steinheim (DE); Missalek, Thorbjörn, 70806 Kornwestheim (DE); Köpf, Ulrich, 71672 Marbach (DE); Haug, Frank Otto, 71691 Freiberg (DE)
(74) Vertreter: Wörz, Volker Alfred

(56) Entgegenhaltungen:
- WO-A-01/33371
- US-A1- 2003 050 970
- US-B1- 6 336 117
- NEWMAN H: "A look at some popular filtering systems" INTERNET CITATION, 25. Juli 1999 (1999-07-25), XP002278819

## Beschreibung

Die Erfindung betrifft ein Verfahren zum Herunterladen von Informationen, die von einem mit einem Kommunikationsnetzwerk verbundenen Informations-Server angeboten werden und über einen mit dem Kommunikationsnetzwerk verbundenen Client angefordert werden, wobei Informationen heruntergeladen werden dürfen, die einem Eintrag in einer weißen Liste entsprechen.

Die Erfindung betrifft auch ein Computersystem umfassend einen mit einem Kommunikationsnetzwerk verbundenen Client, der Mittel aufweist, um eine Information anzufordern, die von mindestens einem ebenfalls mit dem Kommunikationsnetzwerk verbundenen Informations-Server zur Verfügung gestellt wird.

Die Erfindung betrifft ferner ein Computerprogramm, das auf einem Computersystem, insbesondere auf einem Mikroprozessor, ablauffähig ist.

Die Erfindung betrifft schließlich ein Computerprogrammprodukt, umfassend ein auf einem Datenträger gespeichertes Computerprogramm.

Informationen, die über ein Computernetzwerk, beispielsweise das Internet, übermittelt werden, werden häufig von sogenannten Informations-Servern zur Verfügung gestellt. Eine Übertragung derartiger Informationen geschieht beispielsweise mittels sogenannter Netzwerkseiten (auch *Internetseite* oder kurz *Seite* genannt). Zur Beschreibung des Inhalts und der Erscheinungsform einer Netzwerkseite wird eine sogenannte Seiten-Beschreibungs-Sprache verwendet. Heutzutage wird dazu überwiegend die standardisierte Seiten-Beschreibungs-Sprache HTML (hypertext markup language) eingesetzt. Eine mit HTML beschriebene Netzwerkseite wird auch als HTML-Dokument bezeichnet.

Die von einem Informations-Server zur Verfügung gestellten Informationen können mittels des Kommunikationsnetzwerkes an einen Client übertragen werden. Dem geht typischerweise eine Anforderung seitens des Clients bezüglich der Informationen voran, die mittels des Kommunikationsnetzwerkes an den Informations-Server übermittelt wird. Der Informations-Server wertet die von dem Client erhaltene Anforderung aus, überprüft gegebenenfalls eine Berechtigung des Clients zur Anforderung von Informationen und veranlasst, dass die Informationen an den Client übermittelt werden. Der Vorgang, der mit der Anforderung der Informationen seitens des Clients beginnt und der mit einer erfolgten Übermittlung der angeforderten Informationen von dem Informations-Server an den Client endet, wird als *Herunterladen* von Informationen bezeichnet.

Sollen die dem Client von dem Informations-Server, beispielsweise in Form eines HTML-Dokuments, übermittelten Informationen dargestellt werden, so wird die Netzwerkseite bzw. das HTML-Dokument einem sogenannten Browser zugeführt. Als Browser bezeichnet man ein Computerprogramm, das in der Lage ist, HTML-Dokumente zu interpretieren und mittels einer geeigneten grafischen Oberfläche auf einem Datensichtgerät, beispielsweise einem Computermonitor, darzustellen.

Eine Vielzahl von Clients und Servern kommuniziert mittels des Internets. Die zur Verfügung gestellte Netzwerkseiten sind mittels einer URL (uniform resource locator) adressierbar. Eine URL ist u. a. aus dem Namen des die Netzwerkseite zur Verfügung stellenden Servers, einem (zumindest virtuellen) Verzeichnis und einem der Netzwerkseite, beispielsweise dem HTML-Dokument, zugeordneten Namen zusammengesetzt. Eine URL erlaubt es, die dieser URL zugeordnete auf einem Informations-Server abgespeicherte Netzwerkseite besonders bequem von einem Client aus anzufordern. Dazu gibt ein Benutzer beispielsweise mittels einer Tastatur die URL in einem speziellen Eingabefeld des Browsers ein. Der Client generiert daraufhin eine Anfrage an den entsprechenden Informations-Server, der wiederum die angeforderte Netzwerkseite an den Client übermittelt. Ist die übermittelte Netzwerkseite ein HTML-Dokument, so wird dieses HTML-Dokument von dem Browser derartig interpretiert, dass eine Darstellung der in dem HTML-Dokument enthaltenen Informationen zur Wahrnehmung durch den Benutzer möglich ist.

In einem HTML-Dokument ist es insbesondere möglich, URLs weiterer Netzwerkseiten bzw. HTML-Dokumente anzugeben. Derartige URLs werden als Verweis oder als Link bezeichnet. Werden Links mittels eines Browsers einem Benutzer angezeigt, so hat der Benutzer die Möglichkeit, einen derartig dargestellten Link anzuwählen und sich das der angewählten URL entsprechende HTML-Dokument anzeigen zu lassen. Dabei ist es insbesondere möglich, dass sich eine derartig angewählte Netzwerkseite, bzw. ein derartig angewähltes HTML-Dokument, auf einem anderen Informations-Server befindet und dass eine derartig angewählte Netzwerkseite wiederum Links zu weiteren Netzwerkseiten aufweist.

Das Anwählen eines in einem HTML-Dokument dargestellten Links geschieht typischerweise mit einem kombinierten Zeige- und Eingabegerät, beispielsweise einer *Computermaus* bzw. *Maus,* dadurch, dass ein in dem Browser dargestellter Zeiger mittels der Maus auf einen Link bewegt wird. Durch Betätigen einer an der Maus angebrachten Eingabetaste veranlasst der Benutzer, dass mittels des dem Browser zugeordneten Client das durch den Link bezeichnete HTML-Dokument von dem dieses HTML-Dokument zur Verfügung stellenden Informations-Server angefordert wird.

Informations-Server werden beispielsweise von Firmen betrieben, um Informationen über von diesen Firmen angebotene Produkte zur Verfügung zu stellen oder eine Bestellung dieser Produkte zu ermöglichen. Informations-Server werden auch von Privatpersonen betrieben, beispielsweise um ihre politische Gesinnung zu verbreiten oder einem ausgewählten Personenkreis Zugriff auf Urlaubsfotos zu ermöglichen.

Als Client kann jeder PC (Personal Computer) eingesetzt werden, der über einen Anschluss an das Internet verfügt und auf dem ein Browser installiert ist. Derartige Clients sind häufig öffentlich zugänglich, beispielsweise in Form von PCs, die in einem Internet-Café aufgestellt sind oder in Form von sogenannten Info-Terminals, die beispielsweise in Geschäften, in öffentlichen Gebäuden oder auf öffentlichen Plätzen aufgestellt sind.

Üblicherweise wird ein Computer, auf dem eine einen Client realisierende Software abläuft, selbst als Client bezeichnet. Entsprechend wird ein Computer, auf dem eine als Informations-Server ausgebildete Software abläuft, selbst als Informations-Server bzw. Server bezeichnet.

Häufig ist es im Interesse des Betreibers eines Clients, dass nicht alle Informationen, die von einem Informations-Server zur Verfügung gestellt werden, auf dem Client angezeigt werden können. Dies ist beispielsweise bei öffentlich aufgestellten Clients wünschenswert, mittels derer auch minderjährige Benutzer Informationen herunterladen können. In diesen Fällen muss beispielsweise sicher gestellt werden, dass Netzwerkseiten, die beispielsweise pornografische oder gewaltverherrlichende Inhalte haben, nicht auf dem Client dargestellt werden. Ferner kann es bei einem in einem Ladengeschäft aufgestellten Info-Terminal im Interesse des Betreibers liegen, keine Informationen über Produkte von Konkurrenten auf dem Info-Terminal darzustellen.

Vom Markt her sind Systeme zum Filtern der über das Internet angeforderten Informationen bekannt. Ein solches ist beispielsweise das von der Firma BioNet Systems angebotene Net Nanny-System. Dieses Softwaresystem erlaubt das Anlegen einer sogenannten schwarzen Liste, die vollständige URLs oder Teile von URLs derartiger Informationen enthält, die nicht auf dem Client dargestellt werden sollen. Ferner erlaubt Net Nanny die Definition sogenannter weißer Listen, die URLS derartiger Netzwerkseiten enthalten, die auf jeden Fall, wenn sie angefordert wurden, auf dem Client dargestellt werden. Die schwarze und die weiße Liste werden von dem Net Nanny-System jeweils mit einer Liste von URLs initialisiert. Net Nanny stellt weiterhin sogenannte *custom lists* zur Verfügung, die es dem Betreiber eines Clients ermöglichen, selbst URLs zu definieren, die auf dem Client dargestellt bzw. die nicht auf dem Client dargestellt werden dürfen. Desweiteren stellt Net Nanny einen Filtermechanismus zur Verfügung, der angeforderte Netzwerkseiten daraufhin untersucht, ob bestimmte, vorgebbare Zeichenketten, also beispielsweise Wörter, vorhanden sind.

Derartige Systeme haben den Nachteil, dass sie aufwändig zu verwalten sind und häufig eine unbefriedigende Filterwirkung zeigen. Wird beispielsweise eine Anzeige aller Netzwerkseiten verhindert, die die Zeichenkette sex enthalten, können beispielsweise keine medizinische Informationen bezüglich Sexualkrankheiten und keine mathematischen Informationen bezüglichen des sexagesimalen Positionssystems dargestellt werden.

Aus der US 6,336,117 B1 ist ein Verfahren bekannt, das es einer Suchmaschine ermöglicht, den Zugriff auf Informationen zu beschränken, die von der Suchmaschine in Beantwortung einer Suchanfrage durch einen Benutzer bereitgestellt werden. Bei dem bekannten Verfahren wird eine Tabelle erzeugt, die eine schwarze Liste und eine weiße Liste umfasst. Es wird jede Information, die von der Suchmaschine zur verfügung gestellt werden kann, bewertet, was durch Auswerten von Markierungen erreicht wird, die in jedes anforderbare Dokument eingefügt werden. Hierzu ist ein Verfahren offenbart, nach dem von der Suchmaschine Informationen geladen und mit den Markern versehen werden Nachdem die Informationen entsprechend aufbereitet sind, wird eine durch einen Benutzer gestellte Suchanfrage beantwortet. In Beantwortung der Suchanfrage werden die von dem Benutzer angeforderten Informationen von der Suchmaschine geladen und es wird mittels vorgebbarer Regeln in Abhängigkeit von der weißen Liste und der schwarzen Liste geprüft, ob diese Informationen an den Benutzer weitergeleitet werden sollen. Bei dem bekannten verfahren muss folglich der Inhalt der anforderbaren Informationen überprüft werden und es müssen Markierungen erzeugt und den Informationen hinzugefügt werden. Das verfahren benötigt damit vorab einen Zugriff auf die anforderbaren Informationen. Ferner müssen die Adressen der anforderbaren Informationen oder Dokumente vorab bekannt sein. Die Aufbereitung der anforderbaren Informationen ist jedoch zeit- und arbeitsaufwändig ist. Ferner kann das bekannte Verfahren nicht angewendet werden, um einen zugriff auf unbekannte Informationen zu beschränken.

Es ist daher Aufgabe der Erfindung, eine Möglichkeit zum Herunterladen von Informationen zur Verfügung zu stellen, die es auf besonders einfache und flexible weise ermöglicht, die Darstellung unerwünschter Netzwerkseiten zu verhindern.

Die Aufgabe wird dadurch gelöst, dass eine Anforderung nach Informationen in Abhängigkeit von Vertrauenswerten bewertet wird, die den Einträgen in der weißen Liste zugeordnet sind, und ein Zugriff auf die Informationen in Abhängigkeit von einem Ergebnis der Bewertung beschränkt wird.

Ein derartiger Vertrauenswert kann beispielsweise dazu benutzt werden, die Zulässigkeit einer Informationsanforderung zu bestimmen. Dabei kann ein Vertrauenswert mehreren Einträgen in der weißen Liste zugeordnet sein. Ein solcher Vertrauenswert kann beispielsweise als Standardwert vorgesehen sein. Weiteren Einträgen in der Liste kann ein individueller Vertrauenswert zugeordnet sein. Dies ermöglicht eine besonders hohe Flexibilität.

Es ist vorstellbar, einen einem Eintrag in der weißen Liste zugeordneten Vertauenswert dann zu aktivieren, wenn eine diesem Eintrag zugeordnete Netzwerkseite mittels des Clients dargestellt wird. Ausgehend von dieser Netzwerkseite wird dann die Zulässigkeit der folgenden Informationsanforderungen unter Berücksichtigung des Vertrauenswertes beurteilt. Entspricht jedoch eine angeforderte Netzwerkseite einem Eintrag in der weißen Liste, so kann vorgesehen sein, diese Netzwerkseite ohne Berücksichtigung des aktivierten Vertrauenswertes als zulässig zu bewerten und den dieser Netzwerkseite zugeordneten Vertrauenswert zu aktivieren, wenn diese Netzwerkseite mittels des Clients dargestellt wird.

Mittels der Vertrauenswerte wird folglich um eine einem Eintrag in der weißen Liste entsprechenden Netzwerkseite ein sogenannter *Vertrauensbereich* definiert. Netzwerkseiten befinden sich dann innerhalb des Vertrauensbereiches, wenn sie unter Berücksichtigung des Vertrauenswertes als zulässig beurteilt werden würden.
Vorteilhafterweise beschreiben die Vertrauenswerte eine Zeitdauer, während der Informationen heruntergeladen werden, und/oder eine Anzahl von Anforderungen nach Informationen.
Damit ist es möglich, ausgehend von einer Startseite nur für eine bestimmte Zeitspanne und/oder nur eine fest vorgegebene Anzahl von weiteren Informationsanforderungen zuzulassen. Die Startseite kann beispielsweise die sogenannte *Home-Page* einer öffentlichen Institution sein, in der der Client in Form eines Info-Terminals aufgestellt ist. Mittels des erfindungsgemäßen Verfahrens ist es möglich, automatisch, beispielsweise nach zehn Informationsanforderungen, wieder auf die Home-Page zurückzukehren. Dies ermöglicht auf besonders einfache Weise eine Beschränkung von auf dem Client darstellbaren Informationen.

In einer bevorzugten Ausführungsform ist die mittels des Kommunikationsnetzwerkes angebotenen Informationen in verschiedene Bereiche aufgeteilt und die Vertrauenswerte eine Anzahl von Bereichswechseln beschreiben. Eine Aufteilung der mittels des Kommunikationsnetzwerkes angebotenen Informationen in verschiedene Bereiche kann beispielsweise unter physikalischen und logischen Gesichtspunkten dadurch realisiert werden, dass die hierarchische Struktur der Informationen und der die Informationen zur Verfügung stellenden Server berücksichtigt wird.

Das Internet ist beispielsweise nach regionalen (länderspezifisch), physikalischen (Verzeichnisstruktur, Name eines Dokuments) und logischen (Domain) Gesichtspunkten strukturiert und kann in entsprechende Bereiche aufgeteilt werden. Ein Bereichswechsel findet beispielsweise statt, wenn eine angeforderte Netzwerkseite von einem Server in einem anderen Land zur Verfügung gestellt wird oder einer anderen Domain angehört, als eine mittels des Clients aktuell dargestellte Netzwerkseite. Beispielsweise kann einer aktuell auf dem Client dargestellten Netzwerkseite die URL *www.server1.de* zugeordnet sein. Eine neu angeforderte Netzwerkseite kann die URL *www.server2.de* haben. Der Wechsel der Domain von *server1* nach *server2* kann als Bereichswechsel interpretiert werden.

Vorteilhafterweise werden eine einer aktuell auf dem Client dargestellten Information zugeordnete Adresse und eine einer angeforderten Information zugeordnete Adresse unter Verwendung mindesten einer vorgebbaren Regel verarbeitet. In Abhängigkeit des Ergebnisses der Verarbeitung wird dann ein Bereichswechsel bestimmt. Eine derartige Regel kann beispielsweise durch eine Anordnung von zwei unterschiedlichen, durch Zeichen repräsentierte Elemente beschrieben werden, beispielsweise die innerhalb der Klammerung dargestellte Zeichenfolge (*.*.#).
Diese Regel kann bestimmen, dass ein Bereichswechsel dann erkannt wird, wenn die einer angeforderten Netzwerkseite zugeordnete URL, beispielsweise *www.server.de*, sich zumindest durch die regionale Komponente (*de*) von der einer bereits dargestellten Netzwerkseite zugeordneten URL, beispielsweise *www.server.fr*, unterscheidet. Jedoch wird kein Bereichswechsel festgestellt, wenn sich die einer Netzwerkseite zugeordnete URLs der Netzwerkseiten lediglich in den ersten beiden Komponenten unterscheiden. Dies ist durch das Zeichen (*) angezeigt.

Ein Bereichswechsel kann auch festgestellt werden, wenn eine angeforderte Information (*www.server1.de*/*dir1*/*subdir2*/*subsubdir1*/*info.html*) sich zwar auf demselben Server, jedoch unterhalb eines anderen Verzeichnisses wie eine aktuell dargestellte Information (*www.server1.de*/*dir1*/*subdir1*/*subsubdir1*/*welcome.html)* befindet. Dies könnte beispielsweise mit der Regel (*.*.*/*/#) und auch mit der Regel (*.#.#/*/#) erkannt werden. Letztere Regel würde auch einen Wechsel des Servers und des Landes als Bereichswechsel interpretieren. Selbstverständlich könnte eine Regel auch andere Zeichen verwenden und/oder einen anderen Aufbau aufweisen. Insbesondere könnten auch aus sogenannten regulären Ausdrücken (regular expressions) aufgebaute Regeln zur Erkennung eines Bereichswechsels eingesetzt werden.

In einer vorteilhaften Weiterbildung des Verfahrens wird zur Durchführung der Bewertung
- in Abhängigkeit der Anforderung, der Zeitdauer und/oder eines Bereichswechsels ein Wert mindestens eines Zählers verändert;
- der Wert des mindestens einen Zählers mit mindestens einem Vertrauenswert verglichen;
- in Abhängigkeit des Ergebnisses des Vergleichs die Anforderung als zulässig oder als unzulässig bewertet; und
- veranlasst, dass kein Zugriff auf eine Information erfolgt, deren Anforderung als unzulässig bewertet ist.

Die Anzahl der Anforderungen von Informationen wird auch als Anzahl der Navigationsschritte bezeichnet. Der einem Eintrag in der weißen Liste zugeordnete Vertrauenswert kann beispielsweise eine maximale Anzahl von Navigationsschritten bezeichnen. Ausgehend von der Startseite kann dann die Anzahl der angeforderten Informationen, also die Anzahl der Navigationsschritte, bestimmt werden. Die so angeforderten Seiten werden solange als zulässig bewertet, bis die Anzahl der Navigationsschritte den durch den Vertrauenswert definierten Grenzwert überschreitet. Dazu kann beispielsweise
der Wert eines Zählers erhöht und die Anforderung als zulässig bewertet werden, falls der Wert des Zählers kleiner oder gleich dem Grenzwert ist. Ferner erlaubt diese Weiterbildung eine besonderes feine Differenzierung der Zähler. Beispielsweise ist es möglich, einen Zähler für die Domain, einen Zähler für ein Verzeichnis und einen Zähler für die unterhalb eines Verzeichnisses angeforderten Informationen zu verwenden. Zusätzlich kann auch ein Zähler für die Anzahl der Navigationsschritte eingesetzt werden.

Vorzugsweise wird die Anforderung der Information als unzulässig bewertet, falls die dieser Information zugeordnete Adresse einem Eintrag in einer schwarzen Liste entspricht, die Adressen von Informationen enthält, die nicht heruntergeladen werden dürfen. Dies ermöglicht es, beispielsweise ganze Domains oder einzelne Seiten innerhalb einer Domain als unzulässig zu bewerten, unabhängig von dem aktuellen Wert des mindestens einen Zählers. Dies eröffnet eine besonders einfache und flexible Möglichkeit, Netzwerkseiten als unzulässig zu bewerten.

Vorteilhafterweise wird die Anforderung der Information als zulässig bewertet, falls die dieser Information zugeordnete Adresse einem Eintrag in einer Standard-Liste und/oder einem Eintrag in einer weißen Liste entspricht, die Adressen von Informationen enthalten, die heruntergeladen werden dürfen. Dabei ist es vorstellbar, dass die Adresse einer angeforderten Netzwerkseite zuerst dahingehend untersucht wird, ob diese Adresse einem Eintrag in der weißen Liste und/oder einem Eintrag in der Standard-Liste entspricht. Die weiße Liste und die Standard-Liste enthalten folglich Adressen von auf Netzwerkseiten dargestellten Informationen, die unabhängig von dem Zustand des mindestens einen Zählers als zulässig bewertet werden. Dies ermöglicht eine noch flexiblere und dennoch einfache Bewertung bezüglich der Zulässigkeit von angeforderten Informationen. In Verbindung mit einer schwarzen Liste kann insbesondere auch eine Überprüfung mit den Einträgen in der schwarzen Liste vorgeschaltet sein. Wird eine Entsprechung eines Eintrages in einer schwarzen Liste mit der einer angeforderten Information zugeordneten Adresse gefunden, so kann vorgesehen sein, dass kein Überprüfung auf Entsprechung mit den Einträgen in der weißen Liste und der Standardliste durchgeführt wird und eine Informationsanforderung als unzulässig erklärt wird.

Unter der Überprüfung auf Entsprechung der einer angeforderten Information zugeordneten Adresse mit den in der schwarzen Liste, der weißen Liste und der Standard-Liste vorhandenen Einträge ist nicht nur eine Überprüfung auf Übereinstimmung zu verstehen. Eine Überprüfung auf Entsprechung kann vielmehr auch mittels eines sogenannten *pattern matching* Verfahrens durchgeführt werden. Insbesondere ist es vorstellbar, dass die Einträge in der schwarzen Liste, der weißen Liste und/oder der Standard-Liste sogenannte *reguläre Ausdrücke* (regular expressions) sind. Ein regulärer Ausdruck ermöglicht es, mit einer einzigen Zeichenkette (dem regulären Ausdruck) eine bestimmbare Menge von Zeichenketten zu beschreiben.

Vorteilhafterweise wird der mindestens eine Zähler auf einen vorgebbaren Startwert gesetzt, falls die der angeforderten Information zugeordnete Adresse einem Eintrag in der weißen Liste und/oder einem Eintrag in der Standard-Liste entspricht. Ausgehend beispielsweise von einem HTML-Dokument, dessen Adresse einem Eintrag in der weißen Liste und/oder in der Standard-Liste entspricht, kann eine durch den Grenzwert bestimmte Anzahl von weiteren Informationsanforderungen als zulässig bewertet werden. Dabei wird die jeder Anforderung von Informationen zugeordnete Adresse auf Entsprechung mit einem Eintrag in der weißen Liste und/oder in der Standard-Liste überprüft. Wird bei dieser Überprüfung ein entsprechender Eintrag in der weißen Liste und/oder in der Standard-Liste gefunden, so wird der Zähler auf einen vorgebbaren Startwert, beispielsweise Null gesetzt. Damit ist es für einen Benutzer erneut möglich, die durch den Grenzwert bestimmte maximale Anzahl von Navigationsschritten auszuführen und die entsprechenden Informationen herunterzuladen.

Selbstverständlich kann auch bei dieser Ausgestaltung des Verfahrens eine angeforderte Information als unzulässig bewertet werden, wenn die dieser angeforderten Information zugeordnete Adresse einem Eintrag in der schwarzen Liste entspricht.

In einer vorteilhaften Weiterbildung des Verfahrens wird die von dem Informations-Server oder einem weiteren Informations-Server auf den Client übermittelte Information dahingehend überprüft, ob die dieser Information zugeordnete Adresse einem Eintrag in der weißen Liste, der schwarzen Liste und/oder der Standard-Liste entspricht. Die übermittelte Information wird als unzulässig bewertet, falls die dieser Information zugeordnete Adresse einem Eintrag in der schwarzen Liste entspricht. Die übermittelte Information wird als zulässig bewertet, falls die dieser Information zugeordnete Adresse einem Eintrag in der weißen Liste und/oder einem Eintrag in der Standard-Liste entspricht. Ferner wird veranlasst, dass eine als unzulässig bewertete Information von dem Client einem Benutzer nicht dargestellt wird. Es ist vorstellbar, dass stattdessen dem Benutzer eine Information dargestellt wird, die Auskunft darüber gibt, dass und eventuell warum die angeforderte Netzwerkseite nicht dargestellt wird.

Es ist möglich, dass die einer von einem Informations-Server an einen Client übermittelten Information zugeordnete Adresse nicht der ursprünglichen von dem Client angeforderten Information zugeordneten Adresse entspricht. Dies kann beispielsweise dadurch geschehen, dass der Informations-Server für bestimmte Adressen eine sogenannte *automatische Umleitung* vorsieht. Dies bedeutet, dass der Informations-Server eine Informationsanforderung auf eine andere Adresse bzw. URL umleitet. Dadurch würde dem Client die der anderen Adresse bzw. URL zugeordnete Information übermittelt werden.

In diesen Fällen ist es besonders vorteilhaft, nicht nur die von dem Client abgehende Informationsanforderung sondern auch die an den Client übermittelte Information selbst auf Zulässigkeit zu prüfen. Selbstverständlich ist es auch vorstellbar, ausschließlich eine Überprüfung der an den Client übermittelten Informationen vorzunehmen.

In einer besonders bevorzugten Ausführungsform, ist mindestens einem Eintrag in der weißen Liste und/oder einem Eintrag in der Standard Liste eine Menge von Regeln zugeordnet. Dies erlaubt eine besonders flexible Definition der Vertrauensbereiche dadurch, dass eine Regel spezifisch für einen oder mehrere Einträge in der weißen Liste und/oder in der Standard-Liste vorgegeben werden kann. So ist es möglich, einer einem Eintrag in der weißen Liste entsprechenden Netzwerkseite, der ein besonders 'kleiner Vertrauensbereich gewährt werden soll, eine Regel derart zuzuordnen, dass bereits ein Wechsel des Verzeichnisses auf dem Server als Bereichswechsel bewertet wird. Dies könnte entsprechend der oben gewählten Kodierung beispielsweise ausgehend von einer Netzwerkseite *www.server.de*/*dir1*/*subdir1*/*text.html* durch die Regel (*.#.#/#/#/*) erreicht werden.

Der Einsatz der erfindungsgemäßen Regeln erlaubt beispielsweise auch, einen Wechsel des Protokolls zum Datenaustausch (zB.: http, https, ftp), ausgehend von der oben genannten Netzwerkseite, zu bewerten und mittels eines geeigneten Vertrauenswertes, der die maximal zulässige Anzahl dieser Bereichsüberschreitungen beschreibt, zu beschränken. Dies könnte beispielsweise mit der Regel (#//*.#.#/#/#/*) erreicht werden.

Durch die individuelle Vorgabe von Regeln und Vertrauenswerten für die Einträge in der weißen Liste und in der Standard Liste ist es folglich möglich, einen Vertrauensbereich individueller Größe um die einem Eintrag in der weißen Liste oder der Standard-Liste entsprechenden Informationen zu erzeugen. In diesem Vertrauensbereich befinden sich all die Informationen (Internetseiten, HTML-Dokumente), die mit einer dem individuellen Vertrauenswert entsprechenden Anzahl von maximalen Navigationsschritten oder Bereichsüberschreitungen, ausgehend von der dem Eintrag zugeordnete Information, erreicht werden können. Selbstverständlich ist es möglich, dass sich innerhalb dieses Vertrauensbereiches dennoch eine Information befindet, die als unzulässig zu bewerten ist. Beispielsweise kann dann die dieser Information zugeordnete Adresse in der schwarzen Liste abgelegt sein und eine Anzeige dieser Information verweigert werden.

In einer weiteren vorteilhaften Ausführungsform wird der Zähler nur erhöht, wenn ein einer angeforderten Information zugeordneter minimaler Weg größer ist, als der einer angezeigten Information zugeordneter minimaler Weg.
Der Zähler wird folglich nur dann erhöht, wenn der einer angeforderten Information zugeordnete minimale Weg größer ist - also ein Erreichen dieser Information von einer vertrauenswürdigen Adresse 62 ausgehend mehr Bereichswechsel bzw. Navigationsschritte erfordert - als der minimale Weg, der der gegenwärtig angezeigten Information zugeordnet ist. Die Berechnung des minimalen Weges kann beispielsweise in Anlehnung an den Algorithmus von Dijkstra durchgeführt werden.

Die Aufgabe wird auch durch ein Computersystem der eingangs genannten Art dadurch gelöst, dass das Computersystem Mittel aufweist, um ein Verfahren nach einem der Ansprüche 1 bis 10 durchzuführen. Die Vorteile dieser Lösung ergeben sich entsprechend zu den oben genannten Vorteilen des Verfahrens.

Von besonderer Bedeutung ist die Realisierung des erfindungsgemäßen Verfahrens in Form eines Computerprogramms, das für den Ablauf auf einem Computersystem vorgesehen ist. Das Computerprogramm weist einen Programmcode auf, der dazu geeignet ist, das erfindungsgemäße Verfahren durchzuführen, wenn er auf dem Computersystem abläuft. Weiterhin kann der Programmcode auf einem Computerprogrammprodukt der eingangs genannten Art gespeichert sein. Insbesondere kann der Datenträger ein Read-Only-Memory, ein Random-Access-Memory oder ein Flash-Memory sein. Ebenso kann der Datenträger eine Festplatte, eine Diskette, eine Compact Disk (CD), eine Digital Versatile Disk (DVD) oder ein anderer Magnetdatenträger (Band) sein. In diesen Fällen wird die Erfindung durch das Computerprogramm oder das Computerprogrammprodukt realisiert, so dass dieses Computerprogramm und dieses Computerprogrammprodukt in gleicher Weise die Erfindung darstellen wie das Verfahren, zu dessen Ausführung sie geeignet sind.

Weitere Merkmale, Anwendungsmöglichkeiten und Vorteile der Erfindung ergeben sich aus der nachfolgenden Beschreibung von Ausführungsbeispielen der Erfindung, die in den Figuren der Zeichnung dargestellt sind. Dabei bilden alle beschriebenen oder dargestellten Merkmale für sich oder in beliebiger Kombination den Gegenstand der Erfindung, unabhängig von ihrer Zusammenfassung in den Patentansprüchen oder deren Rückbeziehung sowie unabhängig von ihrer Formulierung bzw. Darstellung in der Beschreibung bzw. in der Zeichnung. Es zeigen:
- Figur 1: ein Computersystem, das zur Durchführung des erfindungsgemäßen Verfahrens geeignet ist;
- Figur 2: eine weitere Ausführungsform des in Figur 1 dargestellten Computersystems;
- Figur 3: eine schematische Darstellung von mittels des Internets erreichbaren Informationen und von einer Klassifizierung dieser Informationen in Vertrauensbereiche; und
- Figur 4: ein vereinfachtes Ablaufdiagramm des erfindungsgemäßen Verfahrens.

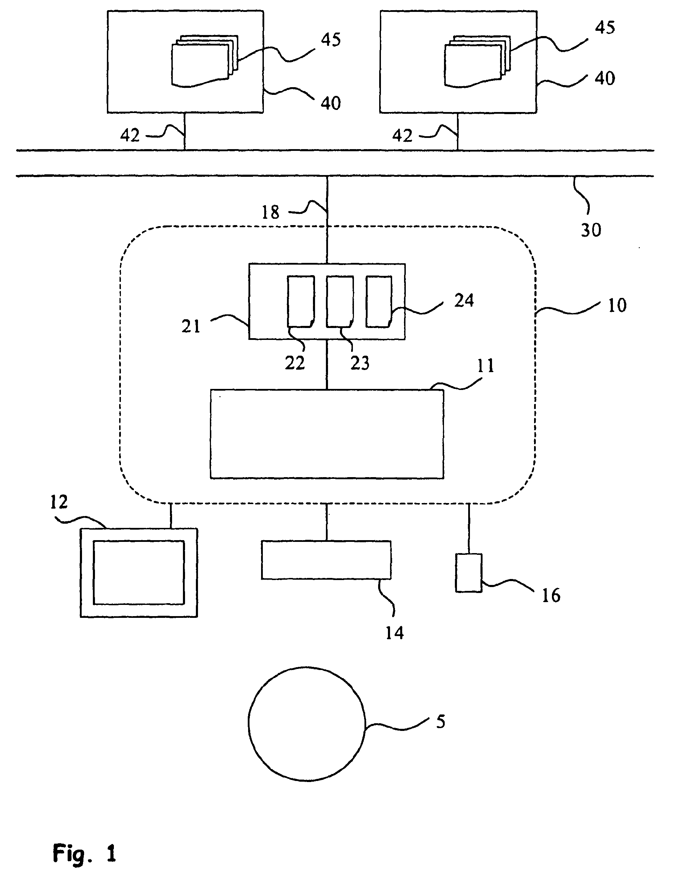

In Figur 1 ist ein Computersystem dargestellt, das einen Client-Computer 10 und mehrere Informations-Server 40 aufweist. Die Informations-Server 40 weisen Informationen, beispielsweise in Form von HTML-Dokumenten realisierten Internetseiten, auf und sind über Datenleitungen 42 mit einem Kommunikationsnetzwerk 30, beispielsweise dem Internet, verbunden. Der Client-Computer 10 weist eine Client-Software, beispielsweise einen Browser 11, und eine Funktionseinheit 21 auf. Der Funktionseinheit 21 sind eine schwarze Liste 22, eine Standard-Liste 23 und eine weiße Liste 24 zugeordnet. Diese Listen können beispielsweise in einer nicht dargestellten Datenbank abgespeichert werden. Es ist auch denkbar, diese Listen auf einem oder mehreren geeigneten Speicherelementen, beispielsweise auf dem Arbeitsspeicher des Client-Computers 10, oder auf einer Compact Disk (CD), abzuspeichern. Der Client-Computer 10 ist über eine Datenleitung 18 ebenfalls mit dem Kommunikationsnetzwerk 30 verbunden. Ferner sind dem in diesem Ausführungsbeispiel dargestellten Client-Computer ein Datensichtgerät, beispielsweise ein Monitor 12, ein Dateneingabegerät, beispielsweise eine Tastatur 14, sowie ein Zeigegerät, beispielsweise eine Maus 16 zugeordnet.

Ein Benutzer 5 interagiert mit dem Client-Computer 10 mittels des Monitors 12, der Tastatur 14 und der Maus 16. Beispielsweise wird dem Benutzer 5 mittels des Monitors 12 eine Internetseite dargestellt. Mit der Maus 16 wählt der Benutzer 5 einen auf der Internetseite dargestellten Verweis oder Link an. Daraufhin generiert der Browser 11 eine Anfrage, um die dem ausgewählten Link entsprechenden Informationen von dem Informations-Server 40 herunterzuladen. Diese Anfrage wird jedoch nicht direkt an das Kommunikationsnetzwerk 30 übermittelt, sondern zuerst von der Funktionseinheit 21 bewertet, insbesondere auf Zulässigkeit überprüft. Entspricht die dem angewählten Link zugeordnete Adresse einem Eintrag in der schwarzen Liste 22, so wird die angeforderte Information als unzulässig bewertet und die Anforderung nicht an den Informations-Server 40 weitergeleitet. Es ist vorstellbar, dass die Funktionseinheit 21 den Browser 11 veranlasst, dem Benutzer 5 mittels des Monitors 12 eine Information darzustellen, die den Benutzer 5 darüber informiert, dass der ausgewählte Link als unzulässig bewertet wurde.

Befindet sich die dem von dem Benutzer 5 ausgewählten Link zugeordnete Adresse in der Standard-Liste 23 oder der weißen Liste 24, so wird diese Anfrage als zulässig bewertet und über das Kommunikationsnetzwerk 30 an den Informations-Server 40 weitergeleitet. Der Informations-Server 40 sucht daraufhin aus den angebotenen Informationen 45 die angeforderte Information heraus und veranlasst, dass diese Information über das Kommunikationsnetzwerk 30 dem Client-Computer 10 zugeführt wird. In dem Client-Computer 10 wird die so übermittelte Information von dem Browser 11 aufbereitet und über den Monitor 12 dem Benutzer 5 dargestellt.

Es ist denkbar, dass die von dem Informations-Server 40 übermittelte Information zuerst von der Funktionseinheit 21 auf Zulässigkeit geprüft wird. Entspricht diese Information beispielsweise nicht der angeforderten Information bzw. befindet sich die dieser Information zugeordnete Adresse in der schwarzen Liste 22, so kann die Funktionseinheit 21 verhindern, dass diese Information an den Browser 11 weitergeleitet und damit dem Benutzer 5 dargestellt wird.

Beim Starten des erfindungsgemäßen Verfahrens ist es vorstellbar, dass dem Benutzer 5 eine Information, beispielsweise eine Internetseite, dargestellt wird, die einem Eintrag in der Standard-Liste entspricht. Dieser Internetseite ist beispielsweise ein durch einen Vertrauenswert definierter Grenzwert von *2* zugeordnet. Der Zähler ist beispielsweise als numerische Variable realisiert und mit dem Startwert *0* initialisiert. Wählt der Benutzer 5 nun mittels der Maus 16 einen auf der Internetseite dargestellten Link an, so erzeugt der Browser 11 daraus eine Informationsanforderung. Die Funktionseinheit 21 vergleicht den aktuellen Wert des Zählers (*0*) mit dem aktuellen Wert des Grenzwerts (*2*) und bewertet die Informationsanforderung als zulässig, falls die dieser Informationsanforderung zugeordnete Adresse keinem Eintrag in der schwarzen Liste 22 entspricht und falls der aktuelle Wert des Zählers kleiner als der Grenzwert ist. Ist eine Begrenzung der Anzahl von Bereichswechseln vorgesehen, so werden die der Ausgangsseite zugeordneten Regeln zusammen mit den dieser Seite und der angeforderten Seite zugeordneten Adressen ausgewertet um festzustellen, ob ein Bereichswechsel vorliegt.

Ist dies der Fall, erhöht die Funktionseinheit 21 den Wert des Zählers auf *1*. Die angeforderte Information wird von dem Informations-Server 40 über das Kommunikationsnetzwerk 30 an den Client-Computer 10 übermittelt, von dem Browser 11 aufbereitet und mittels des Monitors 12 dem Benutzer 5 angezeigt. Wählt der Benutzer 5 nun einen auf dieser Internetseite dargestellten Link aus, so überprüft die Funktionseinheit 21 erneut die Informationsanforderung auf Zulässigkeit und erhöht, beispielsweise bei einem erkannten Bereichswechsel, den Zähler auf den Wert 2, falls die Informationsanforderung als zulässig bewertet wurde. Die diese Information enthaltende Internetseite wird ebenfalls wieder von dem Informations-Server 40 an den Client-Computer 10 übermittelt und dem Benutzer 5 dargestellt. Wählt der Benutzer 5 nun wieder einen Link an, der auf dieser Internetseite dargestellt ist und wird beispielsweise wieder ein Bereichswechsel erkannt, so wird diese Anforderung von der Funktionseinheit 21 als unzulässig bewertet und nicht an den Informations-Server 40 weitergeleitet, da der aktuelle Wert des Zählers (2) dem Grenzwert (2) entspricht.

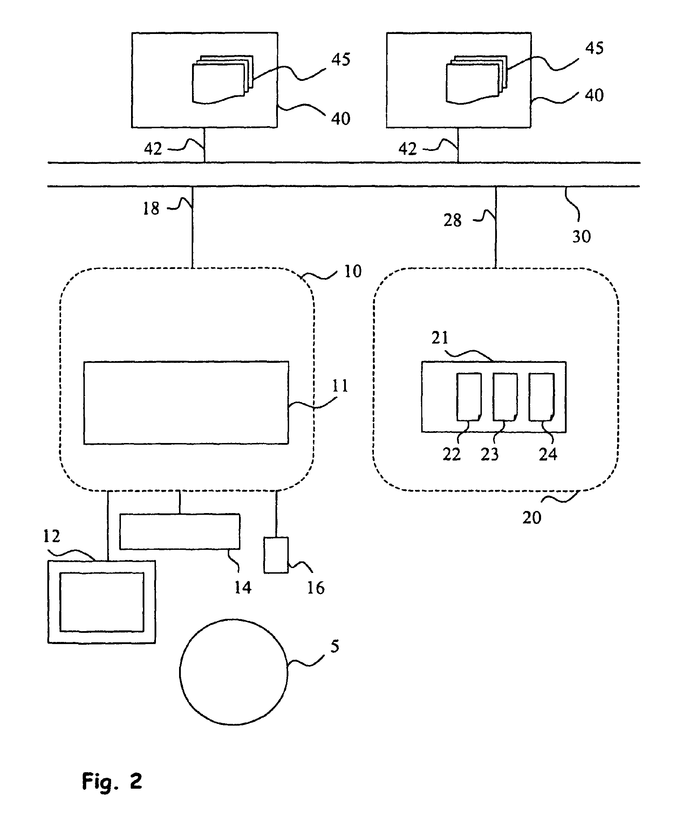

In Figur 2 ist eine Variation des in Figur 1 dargestellten Computersystems gezeigt. Das in Figur 2 dargestellte Computersystem umfasst zusätzlich einen Server-Computer 20, der mit einer Datenleitung 28 mit dem Kommunikationsnetzwerk 30, beispielsweise dem Internet, verbunden ist. Die Funktionseinheit 21 ist nun auf dem Server-Computer 20 ausgebildet. Bei entsprechender Konfiguration des Client-Computers bzw. des Browsers 11 wird eine Informationsanforderung durch den Benutzer 5 nicht direkt dem Informations-Server 40, sondern zunächst dem Server-Computer 20 über das Kommunikationsnetzwerk 30 übermittelt. Dieser überprüft - wie zuvor beschrieben - die Informationsanforderung auf Zulässigkeit und veranlasst nur eine Übermittelung dieser Informationsanforderung an den Informations-Server 40, falls die Informationsanforderung als zulässig bewertet wurde.

Die in Figur 2 dargestellte Variation des Computersystems ermöglicht es, dass beispielsweise die Informationsanforderungen mehrerer Client-Computer 10 an denselben Server-Computer 20 zur Überprüfung der Zulässigkeit der Informationsanfrage übermittelt werden. Eine derartige Zentralisierung der Funktionseinheit 21 ermöglicht eine besonders komfortable und effiziente Verwaltung der schwarzen Liste 22, der Standard-Liste 23 und der weißen Liste 24.

Selbstverständlich ist es möglich, dass sowohl der Client-Computer 10 als auch der Server-Computer 20 eine Funktionseinheit 21 aufweisen. Damit ist es dem Betreiber des Client-Computers 10 möglich, zusätzlich zu den auf dem Server-Computer 20 abgelegten Listen 22, 23, 24 selbst eine oder mehrere Listen zu verwalten und entsprechende Überprüfungen von Informationsanforderungen und übermittelten Informationen durchzuführen.

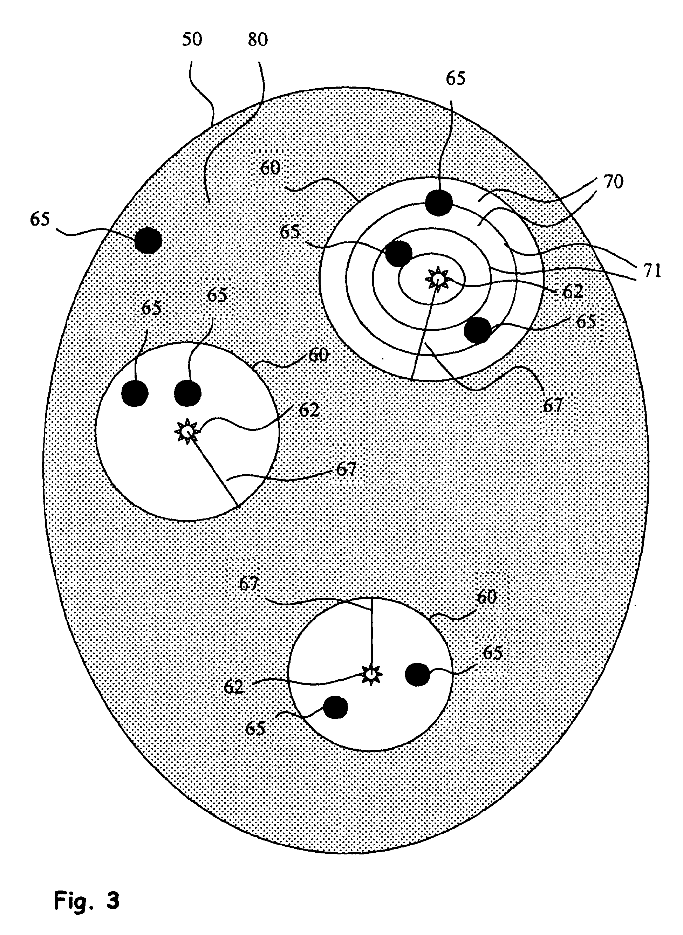

Figur 3 verdeutlicht schematisch eine Klassifizierung der über das Kommunikationsnetzwerk 30, beispielsweise das Internet, anforderbaren Informationen. Mit dem Bezugszeichen 50 ist die Gesamtheit der über das sogenannte *WWW* (World Wide Web) zur Verfügung stehenden Informationen bezeichnet. Das WWW ist ein multimediales Informationssystem im Internet. Als Übertragungsprotokoll zur Übermittlung von HTML-Dokumenten wird im WWW häufig das sogenannte *HTTP* (Hyper Text Transfer Protocol) verwendet.

Mit dem Bezugszeichen 62 sind vertrauenswürdige Adressen bezeichnet. Eine vertrauenswürdige Adresse 62 ist beispielsweise eine Adresse, die einem Eintrag in der weißen Liste 24 oder der Standard-Liste 23 entspricht. Ausgehend von einer vertrauenswürdigen Adresse 62 ist nach dem erfindungsgemäßen Verfahren eine dem Grenzwert entsprechende maximale Anzahl von Informationsanforderungen möglich. Der Grenzwert kann dabei individuell für eine vertrauenswürdige Adresse 62 definiert sein, beispielsweise durch einen Zusatzeintrag in der weißen Liste 24 bzw. in der Standard-Liste 23. Ebenso ist es möglich, einen ersten globalen Vertrauenswert einzusetzen, der für alle Einträge in der weißen Liste 24 verwendet wird und einen zweiten globalen Vertrauenswert einzusetzen, der für alle Einträge in der Standard-Liste 23 verwendet wird. Ebenso ist es möglich, die globalen Vertrauenswerte zu überschreiben, falls einem Eintrag in der weißen Liste 24 oder in der Standard-Liste 23 ein individueller Vertrauenswert zugeordnet ist.

Eine vertrauenswürdige Adresse 62 zusammen mit einem durch einen Vertrauenswert vorgegebenen Grenzwert definiert eine Menge von Informationen, die mit einer maximal dem Grenzwert entsprechenden Anzahl von Navigationsschritten (Anwählen eines Links) oder Bereichsüberschreitungen erreicht und heruntergeladen werden können. Diese Menge wird als Vertrauensbereich 60 bezeichnet. Dabei kann der Vertrauensbereich eines Eintrages in der weißen und/oder der schwarzen Liste derart definiert sein, dass in keinem Vertrauensbereich eine Information liegt, die einem anderen Eintrag in der weißen Liste oder der Standard Liste entspricht. Die mögliche Anzahl von Navigationsschritten oder Bereichsüberschreitungen wird in Figur 3 durch die Länge eines Radius 67 dargestellt.

Selbstverständlich ist es möglich, dass sich zwei oder mehrere Vertrauensbereiche 60 überschneiden. Das bedeutet, dass die sich innerhalb der Schnittmenge befindlichen Informationen ausgehend von den in diesen Vertrauensbereichen 60 liegenden vertrauenswürdigen Adressen 62 erreicht werden können.

Der Vertrauensbereich 60 ist durch Bereichsgrenzen 71 in Bereiche 70 unterteilt. Dabei wird ein Bereich 70 beispielsweise implizit durch die Vorgabe der erfindungsgemäßen Regeln zum Erkennen einer Bereichsüberschreitung bestimmt. Eine Bereichsüberschreitung innerhalb eines Vertrauensbereichs 60 bedeutet dann einen Wechsel von einem Bereich 70 in einen anderen Bereich, wobei eine Bereichsgrenze 71 überschritten wird.

Innerhalb (und auch außerhalb) eines Vertrauensbereichs 60 kann es Informationen, beispielsweise HTML-Dokumente, geben, deren Ausgabe an den Benutzer 5 nicht erwünscht ist. Dies können Informationen sein, die interne Details von Produkten, beispielsweise den Händler-Einkaufspreis, enthalten. Die diesen Seiten zugeordnete Adresse soll folglich als unzulässige Adresse 65 erkannt werden. Eine Adresse wird beispielsweise dann als unzulässige Adresse 65 erkannt, wenn sie einem Eintrag in der schwarzen Liste 22 entspricht.

In Figur 3 finden sich somit die als zulässig zu bewertende Adressen in den weißen Bereichen. Alle Informationen innerhalb des WWW 50, die dem Benutzer 5, beispielsweise aufgrund einer Bereichsüberschreitung oder einer Überschreitung der maximal zulässigen Anzahl von Navigationsschritten, nicht ausgegeben werden sollen, befinden sich in einem grau unterlegten Bereich 80. Die diesen Informationen zugeordneten Adressen sind folglich als unzulässig zu bewerten. Dies geschieht einerseits durch die Überwachung der maximalen Anzahl der zulässigen Navigationsschritte bzw. Bereichsüberschreitungen, die ihrerseits den Vertrauensbereich 60 definieren. Informationen innerhalb eines Vertrauensbereichs 60, die durch eine unzulässige Adresse 65 beschreibbar sind und die dem Benutzer 5 nicht angezeigt werden sollen, sind andererseits identifizierbar durch Überprüfung auf Entsprechung mit den Einträgen in der schwarzen Liste 22.

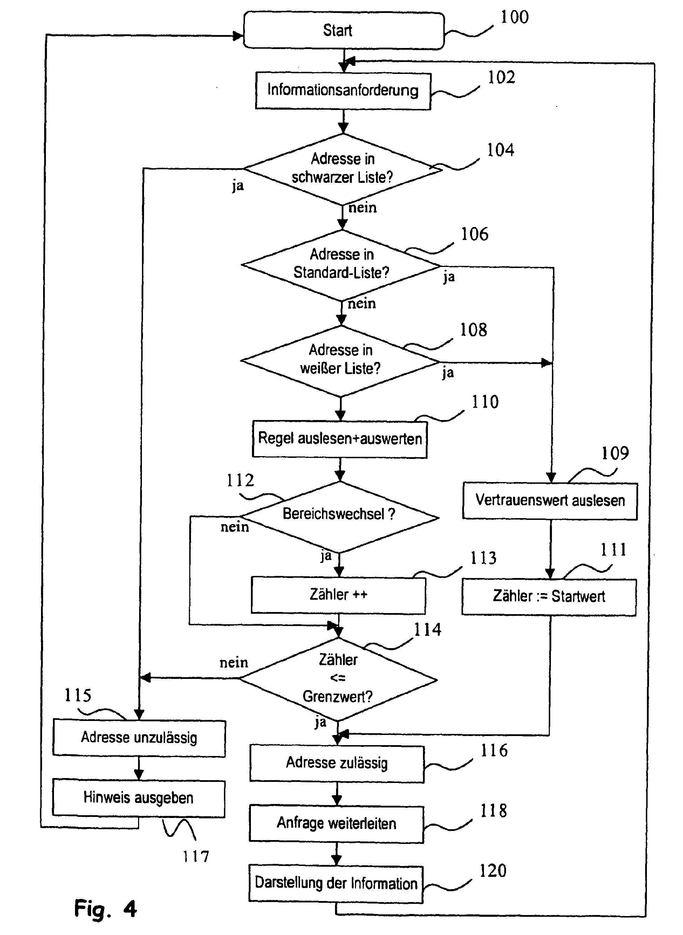

In Figur 4 ist ein beispielhaftes schematisches Ablaufdiagramm für ein erfindungsgemäßes Verfahren dargestellt. Das Verfahren beginnt in einem Schritt 100. In diesem Schritt wird dem Benutzer 5 die einer vertrauenswürdigen Adresse 62 zugeordnete Information, beispielsweise mittels des Monitors 12, angezeigt. Diese Information kann beispielsweise eine voreingestellte Startseite sein. In einem Schritt 102 wählt der Benutzer 5 einen Link aus und fordert durch einen Click mit einer der Maus 16 zugeordneten Taste die diesem Link entsprechenden Informationen an. Diese Informationsanforderung wird der Funktionseinheit 21 übermittelt. Dies kann beispielsweise durch einen parametrisierten Funktionsaufruf geschehen. Ebenso ist es möglich, die Informationsanforderung in einem geeigneten Format über das Kommunikationsnetzwerk 30 an einen externen Server-Computer 20 zu übermitteln.

In einem Schritt 104 wird zunächst in der Funktionseinheit 21 die der angeforderten Information zugeordnete Adresse auf Entsprechung mit einem Eintrag in der schwarzen Liste 22 überprüft. Eine Überprüfung einer Adresse auf Entsprechung mit einem Eintrag in einer Liste, beispielsweise der schwarzen Liste 22, setzt nicht notwendig voraus, dass der Eintrag in der Liste mit der Adresse identisch sein muss. Vielmehr wird ein solcher Eintrag beispielsweise als regulärer Ausdruck (regular expression) dargestellt. Mit geeigneten Softwaretools, beispielsweise awk oder perl, kann dann in einem pattern matching Verfahren erkannt werden, ob eine Adresse von einem regulären Ausdruck umfasst ist.

Wird in dem Schritt 104 eine Entsprechung der der angeforderten Information zugeordneten Adresse mit einem Eintrag in der schwarzen Liste 22 erkannt, so wird zu einem Schritt 115 verzweigt. In dem Schritt 115 wird die der angeforderten Information zugeordnete Adresse als unzulässig bewertet und zu dem Schritt 102 zurückverzweigt. Eine derartig als unzulässig erklärte Adresse entspricht einer unzulässigen Adresse 65 aus Figur 3.

Wird in dem Schritt 104 keine Entsprechung der der angeforderten Information zugeordneten Adresse mit einem Eintrag in der schwarzen Liste 22 erkannt, so wird zu dem Schritt 106 verzweigt. In dem Schritt 106 wird die Adresse daraufhin untersucht, ob sie einem Eintrag in der Standard-Liste entspricht. Ist dies der Fall, so wird zu einem Schritt 109 verzweigt.

In dem Schritt 109 wird ein aktueller Grenzwert bestimmt. Dies kann beispielsweise ein voreingestellter, globaler Grenzwert sein. Ist jedoch dem der Adresse entsprechenden Eintrag in der Standard-Liste 23 ein individueller Grenzwert zugeordnet, so wird dieser ausgelesen. In einem Schritt 111 wird der Zähler mit dem Startwert initialisiert. Dies kann beispielsweise dadurch geschehen, dass der Zähler auf den Wert 0 gesetzt wird.

In einem Schritt 116 wird die der angeforderten Information zugeordnete Adresse als zulässig bewertet. In einem Schritt 118 wird daraufhin veranlasst, dass die Anfrage an den diese Information zur Verfügung stellenden Informations-Server 40, beispielsweise über das Kommunikationsnetzwerk 30, weitergeleitet wird. Wird die Information schließlich dem Client-Computer 10 und dem Benutzer 5 ausgegeben, so kann das Verfahren in dem Schritt 102 fortgesetzt werden, falls der Benutzer 5 erneut eine Information anfordert.

Entsprach in dem Schritt 106 die der angeforderten Information zugeordnete Adresse keinem Eintrag in der Standard-Liste 23, so wird zu einem Schritt 108 verzweigt. In dem Schritt 108 wird die der angeforderten Information zugeordnete Adresse auf Entsprechung mit einem Eintrag in der weißen Liste 24 überprüft. Wird eine Entsprechung festgestellt, so wird zu dem Schritt 109 verzweigt. Entspricht die Adresse jedoch auch keinem Eintrag in der weißen Liste 24, so wird zu dem Schritt 110 verzweigt.

In dem Schritt 110 wird davon ausgegangen, dass ein Vertrauenswert verwendet wird, der eine maximale Anzahl von zulässigen Bereichswechseln vorgibt. Falls noch nicht geschehen, werden die entsprechenden Regeln, beispielsweise aus der weißen Liste oder der Standard Liste oder einer Datenbank, die für Einträge in diesen Listen Regeln bereithält, ausgelesen. Anschließend werden in einem Schritt 112 die Regeln ausgewertet um festzustellen, ob durch eine angeforderte Netzwerkseite ein Bereichswechsel stattfinden würde. Ist dies der Fall, so wird in einem Schritt 113 der Wert des Zählers um den Betrag *1* erhöht. Selbstverständlich ist es möglich, den Zähler um einen anderen Betrag zu erhöhen bzw. in Abhängigkeit des vorgegebenen Grenzwertes um einen bestimmten Betrag zu verringern. Wurde in dem Schritt 112 jedoch kein Bereichswechsel erkannt, so wird direkt zu einem Schritt 114 verzweigt.

Es ist insbesondere auch denkbar, den Zähler nur dann zu erhöhen, wenn eine angeforderte Information, ausgehend von einer vertrauenswürdigen Adresse 62, nur durch mehrere Bereichswechsel bzw. mehrere Navigationsschritte erreicht werden kann, als gegenwärtig bereits ausgeführt wurden. Das bedeutet beispielsweise, dass für jede anforderbare oder angeforderte Information ein sog. *minimaler Weg* berechnet wird. Ein Zähler würde nur dann erhöht werden, wenn der einer angeforderten Information zugeordnete minimale Weg größer ist - also ein Erreichen dieser Information von einer vertrauenswürdigen Adresse 62 ausgehend mehr Bereichswechsel bzw. Navigationsschritte erfordert - als der minimale Weg, der der gegenwärtig angezeigten Information zugeordnet ist.

In einem Schritt 114 wird der Zähler daraufhin überprüft, ob er den durch den Vertrauenswert vorgegebenen Grenzwert überschreitet. Ist dies der Fall, so wird zu dem Schritt 115 verzweigt, wo die der angeforderten Information zugeordnete Adresse als unzulässig bewertet wird. Eine derartig als unzulässig bewertete Adresse, bzw. eine derartig als unzulässig bewertete Information, entspricht einer Information, die sich außerhalb der in Figur 3 dargestellten Vertrauensbereiche 60 befindet. In einem Schritt 117 wird der Client 10 veranlasst, einen Hinweis an den Benutzer 5 auszugeben, der darüber informiert, dass und gegebenenfalls warum die in dem Schritt 102 angeforderte Netzwerkseite nicht angezeigt wird. Von dort kann ein Neustart des Verfahrens in dem Schritt 100 vorgesehen sein, in dem der Client 10 veranlasst wird, eine Startseite anzuzeigen von der ausgehend der Benutzer 5 dann wieder eine Information anfordern kann. Selbstverständlich ist es auch möglich, dass in dem Schritt 117 eine beispielsweise zeitlich begrenzte Sperrung des Clients 10 bzw. des Browsers 11 für weitere Informationsanforderungen durchgeführt wird.

Überschreitet der Zähler den Grenzwert in dem Schritt 114 jedoch nicht, liegt also die angeforderte Information innerhalb eines Vertrauensbereichs 60, so wird zu dem Schritt 116 verzweigt und die der angeforderten Information zugeordnete Adresse als zulässig bewertet. In einem Schritt 118 wird dann veranlasst, dass die Informationsanforderung an den diese Information zur Verfügung stellenden Server 40 weitergeleitet wird und in einem Schritt 120 über den Client 10 dem Benutzer 5 dargestellt wird. Das Verfahren kann dann in dem Schritt 102 fortgesetzt werden, falls der Benutzer eine weitere Information anfordert.

Selbstverständlich sind die in den Figuren 1, 2 und 4 dargestellten Ausführungsformen lediglich als Ausführungsbeispiele zu verstehen. Es ist vorstellbar, dass weitere Komponenten hinzufügt bzw. in diesen Ausführungsbeispielen benannte Komponenten entfernt werden. Beispielsweise kann das Verfahren lediglich mit einer schwarzen Liste 22, also ohne weiße Liste 24 und ohne Standard-Liste 23, durchgeführt werden. Ebenso ist es vorstellbar, dass weitere Listen verwendet werden, die Einträge enthalten, die auf Entsprechung mit der einer Informationsanforderung zugeordneten Adresse geprüft werden. Des weiteren ist es vorstellbar, dass beispielsweise die Standard-Liste 23 durch eine Funktionseinheit 21, die auf dem Client-Computer 10 abläuft, zur Überprüfung einer Adresse auf Entsprechung verwendet wird, während die schwarze Liste 22 und die weiße Liste 24 auf einer Funktionseinheit 21, die auf einem Server-Computer 20 abläuft, zur Überprüfung einer Adresse auf Entsprechung verwendet werden. Dies ermöglicht beispielsweise eine benutzerspezifische Verwendung einer weißen, schwarzen und/oder einer Standard Liste.

Selbstverständlich kann auch das in Figur 4 dargestellte Ablaufdiagramm um weitere Schritte ergänzt werden bzw. können dort vorhandene Schritte entfernt werden. Beispielsweise ist es vorstellbar, zwischen den Schritten 118 und 120 mehrere weitere Schritte einzuführen, in denen die von dem Informations-Server 40 übermittelte Information zuerst von der Funktionseinheit 21 daraufhin untersucht wird, ob die der übermittelten Information zugeordnete Adresse der ursprünglich angeforderten Adresse entspricht. Ist dies nicht der Fall, so könnte beispielsweise überprüft werden, ob die der übermittelten Information zugeordnete Adresse einem Eintrag in der schwarzen Liste 22 entspricht. Die Funktionseinheit 21 würde nur dann eine Übermittlung der entsprechenden Information veranlassen, wenn keine Entsprechung mit einem Eintrag in der schwarzen Liste 22 erkannt worden ist.

Ferner ist es vorstellbar, mehrere Zähler einzusetzen. Außerdem können die Zähler unterschiedlicher Art sein. Beispielsweise kann ein Zähler dazu benutzt werden um zu protokollieren, wie häufig ein Domain-Wechsel stattgefunden hat. Dies kann beispielsweise durch Auswertung der einer angeforderten Information zugeordneten Adresse (URL) einfach erkannt werden. Ein weiterer Zähler könnte dazu benutzt werden um zu protokollieren, wie häufig innerhalb einer Domain Informationen angefordert werden. Eine Informationsanforderung könnte beispielsweise dann als unzulässig bewertet werden, wenn mehr als 5-mal eine Domain gewechselt werden würde oder wenn innerhalb einer Domain mehr als 10 Informationen angefordert werden würden.

Dementsprechend könnte die weiße Liste 24 und/oder die Standard-Liste 23 lediglich konkrete Adressen von Domains enthalten. Selbstverständlich ist es auch möglich, das Verfahren ohne schwarze Liste 22 durchzuführen.

## Patentansprüche

1. Verfahren zum Herunterladen von Informationen (45), die von einem mit einem Kommunikationsnetzwerk (30) verbundenen Informations-Server (40) angeboten werden und über einen mit dem Kommunikationsnetzwerk (30) verbundenen Client (10) angefordert werden, wobei Informationen heruntergeladen werden dürfen, die einem Eintrag in einer weißen Liste (24) entsprechen,
**dadurch gekennzeichnet, dass**
- eine Anforderung nach Informationen in Abhängigkeit von Vertrauenswerten bewertet wird, die den Einträgen in der weißen Liste (24) zugeordnet sind, wobei jeder Vertrauenswert einen Vertrauensbereich (60) um den Eintrag beschreibt, dem der Vertrauenswert zugeordnet ist;
- und ein Zugriff auf die Informationen (45) in Abhängigkeit von einem Ergebnis der Bewertung beschränkt wird, wenn sich die Information nicht innerhalb eines Vertrauensbereichs befindet.

2. Verfahren nach Anspruch 1, **dadurch gekennzeichnet, dass** die Vertrauenswerte eine Zeitdauer, während der Informationen heruntergeladen werden, und/oder eine Anzahl von Anforderungen nach Informationen (45) beschreiben.

3. Verfahren nach Anspruch 1 oder 2, **dadurch gekennzeichnet, dass** die mittels des Kommunikationsnetzwerkes (30) angebotenen Informationen (45) in verschiedene Bereiche aufgeteilt sind und die Vertrauenswerte eine Anzahl von zulässigen Bereichswechseln beschreiben.

4. Verfahren nach Anspruch 2 oder 3, **dadurch gekennzeichnet, dass** eine einer aktuell auf dem Client (10) dargestellten Information zugeordnete Adresse und eine einer angeforderten Information zugeordnete Adresse unter Verwendung mindestens einer vorgebbaren Regel verarbeitet werden und ein Bereichswechsel in Abhängigkeit des Ergebnisses der Verarbeitung bestimmt wird.

5. Verfahren nach Anspruch 2 bis 4, **dadurch gekennzeichnet, dass** zur Durchführung der Bewertung
a. in Abhängigkeit der Anforderung, der Zeitdauer und/oder eines Bereichswechsels ein Wert mindestens eines Zählers verändert wird;
b. der Wert des mindestens einen Zählers mit mindestens einem Vertrauenswert verglichen wird;
c. in Abhängigkeit des Ergebnisses des Vergleichs die Anforderung als zulässig oder als unzulässig bewertet wird; und
d. veranlasst wird, dass kein Zugriff auf eine Information erfolgt, deren Anforderung als unzulässig bewertet ist.

6. Verfahren nach einem der vorangehenden Ansprüche, **dadurch gekennzeichnet, dass** die Anforderung der Information als unzulässig bewertet wird, falls die dieser Information zugeordnete Adresse einem Eintrag in einer schwarzen Liste (22) entspricht, die Adressen von Informationen enthält, die nicht heruntergeladen werden dürfen.

7. Verfahren nach einem der vorangehenden Ansprüche, **dadurch gekennzeichnet, dass** die Anforderung der Information (45) als zulässig bewertet wird, falls die dieser Information zugeordnete Adresse einem Eintrag in einer Standard-Liste (23) entspricht, die Adressen von Informationen enthalten, die heruntergeladen werden dürfen.

8. Verfahren nach einem der Ansprüche 5 bis 7, **dadurch gekennzeichnet, dass** der mindestens eine Zähler auf einen vorgebbaren Startwert gesetzt wird, falls die der angeforderten Information (45) zugeordnete Adresse einem Eintrag in der weißen Liste (24) und/oder einem Eintrag in der Standard-Liste (23) entspricht.

9. Verfahren nach einem der Ansprüche 6 bis 8, **dadurch gekennzeichnet, dass**
a. die von dem Informations-Server (40) oder einem weiteren Informations-Server (40) an den Client (10) übermittelte Information dahingehend überprüft wird, ob die dieser Information zugeordnete Adresse einem Eintrag in der weißen Liste (24), der schwarzen Liste (22) und/oder der Standard-Liste (23) entspricht;
b. die übermittelte Information als unzulässig bewertet wird, falls die dieser Information zugeordnete Adresse einem Eintrag in der schwarzen Liste (22) entspricht und/oder die übermittelte Information als zulässig bewertet wird, falls die dieser Information zugeordnete Adresse einem Eintrag in der weißen Liste (24) und/oder einem Eintrag in der Standard-Liste (23) entspricht; und
c. veranlasst wird, dass eine als unzulässig bewertete Information nicht von dem Client (10) einem Benutzer (5) ausgegeben wird.

10. Verfahren nach einem der Ansprüche 4 bis 9, **dadurch gekennzeichnet, dass** mindestens einem Eintrag in der weißen Liste (24) und/oder einem Eintrag in der Standard Liste (23) eine Menge von Regeln zugeordnet ist.

11. Verfahren nach einem der Ansprüche 5 bis 10, **dadurch gekennzeichnet, dass** der Zähler nur erhöht wird, wenn ein einer angeforderten Information zugeordneter minimaler Weg größer ist, als der einer angezeigten Information zugeordnete minimaler Weg.

12. Computersystem umfassend einen mit einem Kommunikationsnetzwerk (30) verbundenen Client (10), der Mittel aufweist, um eine Information (45) anzufordern, die von mindestens einem ebenfalls mit dem Kommunikationsnetzwerk (30) verbundenen Informations-Server (40) zur Verfügung gestellt wird, **dadurch gekennzeichnet, dass** das Computersystem Mittel aufweist, um ein verfahren nach einem der Ansprüche 1 bis 11 durchzuführen.

13. Computerprogramm, das auf einem Computersystem, insbesondere auf einem Mikroprozessor, ablauffähig ist, **dadurch gekennzeichnet, dass** das Computerprogramm zur Ausführung eines Verfahrens nach einem der Ansprüche 1 bis 11 geeignet ist, wenn es auf dem Computersystem abläuft.

14. Computerprogrammprodukt, umfassend ein auf einem Datenträger gespeichertes Computerprogramm, **dadurch gekennzeichnet, dass** ein Verfahren nach einem der Ansprüche 1 bis 11 durchführbar ist, wenn das Computerprogrammprodukt in einem Computersystem verwendet wird.

15. Computerprogrammprodukt nach Anspruch 14, **dadurch gekennzeichnet, dass** der Datenträger ein Read-Only-Memory, ein Random-Access-Memory oder ein Flash-Memory ist.

16. Computerprogrammprodukt nach Anspruch 15, **dadurch gekennzeichnet, dass** der Datenträger eine Festplatte, eine Diskette, eine Compact Disk (CD) oder eine Digital Versatile Disk (DVD) ist.

## Claims

1. Method for downloading information (45) which is offered by an information server (40) connected with a communications network (30) and which is requested via a client (10) connected with the communication network (30), whereby information may be downloaded which corresponds to an entry in a white list (24),
**characterised in that**
- a request for information is evaluated according to trust values assigned to the entries in the white list (24), whereby each trust value describes a trust interval (60) around the entry which is assigned the trust value;
- and access to the information (45) is restricted depending on a result of the evaluation if the information does not lie within a trust interval.

2. Method according to claim 1, **characterised in that** the trust values describe a period of time during which the information is downloaded, and/or a number of requests for information (45).

3. Method according to claim 1 or 2, **characterised in that** the information (45) offered by means of the communications network (30) is divided into different areas, and the trust values describe a number of permissible changes of area.

4. Method according to claim 2 or 3, **characterised in that** an address assigned to an information item currently displayed on the client (10) and an address assigned to a requested information item are processed using at least one specifiable rule and a change of area is determined depending on the result of the processing.

5. Method according to claim 2 to 4, **characterised in that** in order to carry out the evaluation
a. a value of at least one counter is changed depending on the request/the duration and/or a change of area;
b. the value of the at least one counter is compared with at least one trust value;
c. depending on the result of the comparison the request is evaluated as being admissible or as inadmissible; and
d. no access is allowed to an information item the request for which is evaluated as being inadmissible.

6. Method according to one of the preceding claims, **characterised in that** the request for the information is evaluated as being inadmissible if the address assigned to this information corresponds to an entry in a black list (22) which contains the addresses of information which may not be downloaded.

7. Method according to one of the preceding claims, **characterised in that** the request for the information (45) is evaluated as being admissible if the address assigned to this information corresponds to an entry in a standard list (23) which contains the addresses of information which may be downloaded.

8. Method according to one of the claims 5 to 7, **characterised in that** the at least one counter is set to a specifiable start value if the address assigned to the requested information item (45) corresponds to an entry in the white list (24) and/or an entry in the standard list (23).

9. Method according to one of the claims 6 to 8, **characterised in that**
a. the information communicated to the client (10) by the information server (40) or another information server (40) is checked to determine whether the address assigned to this information corresponds to an entry in the white list (24), the black list (22) and/or the standard list (23);
b. the communicated information is evaluated as being inadmissible if the address assigned to this information corresponds to an entry in the black list (22) and/or the communicated information is evaluated as being admissible if the address assigned to this information corresponds to an entry in the white list (24) and/or an entry in the standard list (23); and
c. it is arranged that an information item which is evaluated as being inadmissible is not released by the client (10) to a user (5).

10. Method according to one of the claims 4 to 9, **characterised in that** at least one entry in the white list (24) and/or an entry in the standard list (23) is assigned a quantity of rules.

11. Method according to one of the claims 5 to 10, **characterised in that** the counter is only increased if a minimal path assigned to a requested information item is greater than the minimal path assigned to a displayed information item.

12. Computer system comprising a client (10) connected with a communications network (30) which possesses means of requesting an information item (45) which is made available by at least one information server (40) which is also connected with the communication network (30), **characterised in that** the computer system possesses means for performing a method according to one of the claims 1 to 11.

13. Computer program capable of running on a computer system, in particular on a microprocessor, **characterised in that** the computer program is capable of performing a method according to one of the claims 1 to 11 when it runs on the computer system.

14. Computer program product, comprising a computer program stored on a data medium, **characterised in that** a method according to one of the claims 1 to 11 can be performed when the computer program product is used in a computer system.

15. Computer program product according to claim 14, **characterised in that** the data medium is a Read-Only Memory, a Random Access Memory or a Flash Memory.

16. Computer program product according to claim 15, **characterised in that** the data medium is a hard disk, a diskette, a Compact Disc (CD) or a Digital Versatile Disc (DVD).

## Revendications

1. Procédé pour télécharger des informations (45) qui sont proposées par un serveur d'informations (40) relié à un réseau de communication (30) et demandées par l'intermédiaire d'un client (10) relié au réseau de communication (30), dans lequel les informations qui peuvent être téléchargées correspondent à une entrée dans une liste blanche (24), **caractérisé en ce que**
- une demande d'informations est évaluée en fonction d'indices de confiance associés aux entrées de la liste blanche (24), chaque indice de confiance décrivant un intervalle de confiance (60) autour de l'entrée à laquelle l'indice de confiance est associé ;
- et un accès aux informations (45) est limité en fonction d'un résultat de l'évaluation lorsque l'information ne se situe pas à l'intérieur d'un intervalle de confiance.

2. Procédé selon la revendication 1, **caractérisé en ce que** les indices de confiance décrivent une durée pendant laquelle des informations sont téléchargées et/ou un nombre de demandes d'informations (45).

3. Procédé selon la revendication 1 ou la revendication 2, **caractérisé en ce que** les informations (45) proposées au moyen du réseau de communication (30) sont partagées en différents domaines et **en ce que** les indices de confiance décrivent un nombre de changements de domaines admissibles.

4. Procédé selon la revendication 2 ou la revendication 3, **caractérisé en ce qu'**une adresse associée à une information en cours de présentation sur le client (10) et une adresse associée à une information demandée sont traitées en utilisant au moins une règle prédéfinissable et **en ce qu'**un changement de domaine est déterminé en fonction du résultat de ce traitement.

5. Procédé selon l'une des revendications 2 à 4, **caractérisé en ce que**, pour effectuer l'évaluation,
a. une valeur d'au moins un compteur est modifiée en fonction de la demande, de la durée et/ou d'un changement de domaine ;
b. la valeur dudit au moins un compteur est comparée à au moins un indice de confiance ;
c. en fonction du résultat de la comparaison, la demande est jugée admissible ou non admissible ; et
d. il est fait en sorte d'empêcher l'accès à une information dont la demande a été jugée non admissible.

6. Procédé selon l'une des revendications précédentes, **caractérisé en ce que** la demande de l'information est jugée non admissible lorsque l'adresse associée à cette information correspond à une entrée dans une liste noire (22) qui contient des adresses d'informations dont le téléchargement n'est pas autorisé.

7. Procédé selon l'une des revendications précédentes, **caractérisé en ce que** la demande de l'information (45) est jugée admissible lorsque l'adresse associée à cette information correspond à une entrée dans une liste standard (23) qui contient des adresses d'informations dont le téléchargement est autorisé.

8. Procédé selon l'une des revendications 5 à 7, **caractérisé en ce que** ledit au moins un compteur est positionné à une valeur de départ pré-définissable lorsque l'adresse associée à l'information (45) demandée correspond à une entrée dans la liste blanche (24) et/ou à une entrée dans la liste standard (23).

9. Procédé selon l'une des revendications 6 à 8, **caractérisé en ce que**
a. l'information transmise par le serveur d'informations (40) ou par un autre serveur d'informations (40) au client (10) est contrôlée afin de vérifier si l'adresse associée à cette information correspond à une entrée dans la liste blanche (24), dans la liste noire (22) et/ou dans la liste standard (23) ;
b. l'information transmise est jugée non admissible lorsque l'adresse associée à cette information correspond à une entrée dans la liste noire (22) et/ou l'information transmise est jugée admissible lorsque l'adresse associée à cette information correspond à une entrée dans la liste blanche (24) et/ou à une entrée dans la liste standard (23) ; et
c. il est fait en sorte qu'une information jugée non admissible ne soit pas délivrée par le client (10) à un utilisateur (5).

10. Procédé selon l'une des revendications 4 à 9, **caractérisé en ce qu'**une quantité de règles est associée à au moins une entrée de la liste blanche (24) et/ou une entrée de la liste standard (23).

11. Procédé selon l'une des revendications 5 à 10, **caractérisé en ce que** le compteur est incrémenté uniquement lorsqu'un chemin minimal associé à une information demandée est plus grand que le chemin minimal associé à une information affichée.

12. Système informatique comprenant un client (10) qui est relié à un réseau de communication (30) et qui présente des moyens pour demander une information (45) mise à disposition sur au moins un serveur d'informations (40) relié lui aussi au réseau de communication (30), **caractérisé en ce que** ledit système informatique présente des moyens qui permettent la mise en oeuvre d'un procédé selon l'une des revendications 1 à 11.

13. Logiciel informatique exécutable sur un système informatique, en particulier sur un microprocesseur, **caractérisé en ce que** ledit logiciel est adapté pour mettre en oeuvre un procédé selon l'une des revendications 1 à 11 lorsqu'il est exécuté sur le système informatique.

14. Produit logiciel informatique, comprenant un logiciel informatique stocké sur un support de données, **caractérisé en ce qu'**un procédé selon l'une des revendications 1 à 11 peut être mis en oeuvre lorsque ledit produit logiciel informatique est utilisé dans un système informatique.

15. Produit logiciel informatique selon la revendication 14, **caractérisé en ce que** le support de données est une mémoire à lecture seule, une mémoire à accès aléatoire ou une mémoire flash.

16. Produit logiciel informatique selon la revendication 15, **caractérisé en ce que** le support de données est un disque dur, une disquette, un CD (Compact Disc) ou un DVD (Digital Versatile Disc).
